# EUROPEAN PATENT SPECIFICATION

(11) **EP 3 051 106 B1**
(45) Date of publication and mention of the grant of the patent: **22.08.2018**
(21) Application number: 16153460.7
(22) Date of filing: 29.01.2016
(51) Int. Cl.: F02D 41/04, F01N 3/20, F02N 11/08, F02D 41/02

(54) **CONTROL DEVICE FOR INTERNAL COMBUSTION ENGINE**
STEUERUNGSVORRICHTUNG FÜR VERBRENNUNGSMOTOR
DISPOSITIF DE CONTRÔLE POUR MOTEUR À COMBUSTION INTERNE

(30) Priority: 02.02.2015 JP 2015018447
(43) Date of publication of application: 03.08.2016
(73) Proprietor: Toyota Jidosha Kabushiki Kaisha, Toyota-shi, Aichi-ken 471-8571 (JP)
(72) Inventor: OTA, Hirohiko, TOYOTA-SHI, AICHI-KEN, 471-8571 (JP)
(74) Representative: Intès, Didier Gérard André

(56) References cited:
- EP-A1- 2 685 072
- WO-A1-2014/192320
- DE-A1-102007 000 666
- DE-A1-102011 009 620
- FR-A1- 3 006 001
- US-A1- 2013 283 769

## Description

### BACKGROUND OF THE INVENTION

### 1. Field of the Invention

The invention relates to a control device for an internal combustion engine.

### 2. Description of Related Art

Japanese Patent Application Publication No. 2008-133780 (JP 2008-133780 A) discloses an internal combustion engine in which an adding valve injecting an additive into an exhaust passage is disposed.

### SUMMARY OF THE INVENTION

When the internal combustion engine according to JP 2008-133780 A is stopped immediately after a stop command is made in a case where a temperature of exhaust gas is raised during an operation preceding the stop command for the engine, temperatures of the adding valve exposed to the exhaust gas and a place around the adding valve are increased by residual heat after the engine is stopped. This might lead to a failure attributable to overheating of the adding valve after the internal combustion engine is stopped. According to FR3006001 or WO2014192320, an engine idle operation is continued until the determined temperature of adding valve has decreased below a threshold value.

The invention provides a control device for an internal combustion engine that is capable of suppressing overheating of an adding valve after the internal combustion engine is stopped.

According to an aspect of the invention, a control device for an internal combustion engine is provided. The internal combustion engine includes an adding valve for injecting an additive into an exhaust passage of the internal combustion engine. The control device includes an electronic control unit. The electronic control unit is configured to control the internal combustion engine after a stop command for the internal combustion engine is made such that the internal combustion engine is stopped after an idle operation of the internal combustion engine. The electronic control unit is configured to calculate a timing at which the internal combustion engine is to be stopped after the idle operation in accordance with a temperature of the adding valve. With the control device according to the aspect described above, the idle operation is allowed to continue with the timing, at which the internal combustion engine is to be stopped, postponed, and thus overheating of the adding valve attributable to residual heat raising the temperature of the adding valve after the stopping of the engine can be suppressed.

In the control device according to the aspect described above, the electronic control unit may be configured to proceed with the idle operation until a predetermined delay time is over after the stop command is made. The electronic control unit may be configured to set a longer delay time when the temperature of the adding valve in the event of the stop command is high than when the temperature is low. In this case, a point in time when the delay time is over after the stop command for the internal combustion engine is made becomes the timing at which the internal combustion engine is to be stopped during the idle operation. Accordingly, the timing at which the internal combustion engine is to be stopped during the idle operation is postponed when the temperature of the adding valve in the event of the stop command for the internal combustion engine is high, that is, when the temperature of the adding valve is likely to be high after the stopping of the engine. In other words, the idle operation following the stop command for the internal combustion engine continues for a long period of time. Accordingly, when the temperature of the adding valve in the event of the stop command for the internal combustion engine is high and the temperature of the adding valve is likely to be high after the engine is stopped, the adding valve can be cooled by the exhaust gas low in temperature attributable to the idle operation being allowed to flow through the exhaust passage over a long period of time.

In the control device according to the aspect described above, the electronic control unit may be configured to stop the internal combustion engine when the temperature of the adding valve is reduced and reaches a target value during the idle operation. In this case, a point in time when the temperature of the adding valve reaches the target value after the stop command for the internal combustion engine is made becomes the timing at which the internal combustion engine in the idle operation is to be stopped. Accordingly, when it takes a long time for the temperature of the adding valve to be reduced and reach the target value, that is, when the temperature of the adding valve during the idle operation is high, the timing at which the internal combustion engine in the idle operation is to be stopped is postponed. In other words, the idle operation subsequent to the stop command for the internal combustion engine continues for a long period of time. The internal combustion engine is not stopped before the temperature of the adding valve is reduced and reaches the target value since the idle operation is terminated and the internal combustion engine is stopped after the temperature of the adding valve is reduced and reaches the target value as described above. Accordingly, the temperature of the adding valve can be reduced more reliably based on the continuation of the idle operation.

In the control device according to the aspect described above, the electronic control unit may be configured to execute the idle operation subsequent to the stop command in a case where a traveling speed of a vehicle in which the internal combustion engine is mounted is lower than a threshold determined in advance. In a case where the vehicle has a low traveling speed value that is lower than the threshold, cooling of the adding valve based on traveling wind becomes difficult and the overheating of the adding valve is likely to ensue. However, the cooling of the adding valve by the low-temperature exhaust gas can be performed through the continuation of the idle operation subsequent to the stop command for the internal combustion engine so that the overheating of the adding valve attributable to the above-described situation is suppressed.

The internal combustion engine to which the control device described above is applied may be provided with a filter positioned on an upstream side of the adding valve in the exhaust passage for collecting particulate matter in exhaust gas and a regulator for adjusting a flow rate of the exhaust gas flowing through the exhaust passage. The electronic control unit may be configured to control the regulator during the idle operation and in a case where a filter regeneration processing for raising a temperature of the filter through a reaction between an unburned fuel component and oxygen for removal of the particulate matter collected by the filter is executed such that the flow rate of the exhaust gas flowing through the exhaust passage is decreased. During the execution of the filter regeneration processing, the temperature of the filter positioned at a part on the upstream side of the adding valve in the exhaust passage increases, and thus the temperature of the exhaust gas flowing from the filter to the adding valve is likely to increase. Accordingly, in a case where filter regeneration is executed during the idle operation subsequent to the stop command for the internal combustion engine, the flow rate of the exhaust gas flowing through the exhaust passage is decreased through an operation of an adjusting mechanism by the flow rate control unit. Accordingly, the amount of the oxygen reacting with the unburned fuel component in the exhaust passage is reduced, and thus a rise in the temperature of the filter attributable to the reaction can be suppressed. As a result, a rise in the temperature of the exhaust gas at a part on a downstream side of the filter in the exhaust passage can be suppressed, and a flow of the exhaust gas high in temperature from the filter to the adding valve can be suppressed. Accordingly, the overheating of the adding valve attributable to the flow of the high-temperature exhaust gas from the filter to the adding valve can be suppressed.

In addition, the electronic control unit may be configured to control the regulator when the filter regeneration processing is executed during the idle operation such that the flow rate of the exhaust gas flowing through the exhaust passage is decreased as the temperature of the filter increases. In this case, the amount of the oxygen reacting with the unburned fuel component in the filter regeneration processing can be decreased as the temperature of the filter during the idle operation increases, and a rise in the temperature of the filter attributable to the reaction can be more effectively suppressed. Accordingly, a decrease in the flow rate of the exhaust gas can be performed without excess or deficiency when the decrease in the flow rate of the exhaust gas is performed so that the overheating of the adding valve attributable to the flow of the high-temperature exhaust gas from the filter to the adding valve is suppressed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic drawing illustrating overall configurations of an internal combustion engine and a control device for the internal combustion engine;
FIG. 2 is a flowchart illustrating an execution procedure for a cooling operation equivalent to a delay time regarding a stop delay processing;
FIG. 3 is a graph illustrating how the delay time tends to change with respect to a change in a temperature of an adding valve in the case of a stop command for the internal combustion engine (temperature at a stop command);
FIG. 4 is a flowchart illustrating a procedure of an initiation of the cooling operation regarding the stop delay processing;
FIG. 5 is a flowchart illustrating an execution procedure for the cooling operation;
FIG. 6 is a flowchart illustrating driving procedures for an intake throttle valve and a variable nozzle;
FIG. 7 is a graph illustrating a relationship between a temperature of a filter and an opening degree of the variable nozzle; and
FIG. 8 is a graph illustrating a relationship between the temperature of the filter and an opening degree of the intake throttle valve.

### DETAILED DESCRIPTION OF EMBODIMENTS

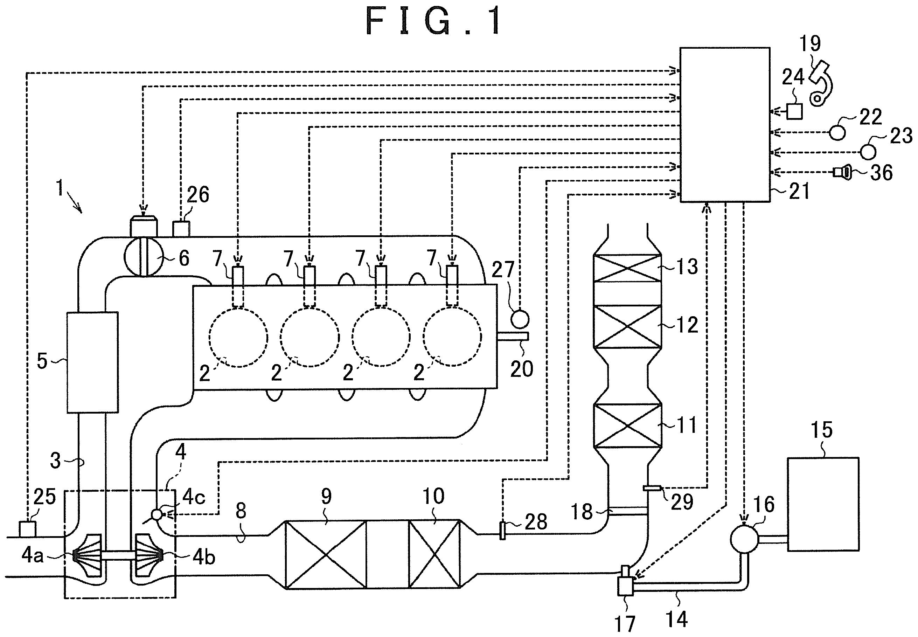

[First Embodiment] Hereinafter, a first embodiment of a control device for an internal combustion engine will be described with reference to FIGS. 1 to 3.

As illustrated in FIG. 1, an intake passage 3 is connected to combustion chambers 2 of an internal combustion engine 1 that is mounted in a vehicle. In this intake passage 3, a compressor wheel 4a of a turbocharger 4, an intercooler 5, and an intake throttle valve 6 are disposed in order from its upstream side. Air passing through the intake passage 3 is suctioned into the combustion chambers 2 of the internal combustion engine 1 and a fuel from fuel injection valves 7 is injection-supplied into the combustion chambers 2 of the internal combustion engine 1. The internal combustion engine 1 is driven when this fuel is burned in the combustion chambers 2. Exhaust gas resulting from the combustion of the fuel in the combustion chambers 2 is sent to an exhaust passage 8 that is connected to the combustion chambers 2. In the exhaust passage 8, a turbine wheel 4b of the turbocharger 4, a first oxidation catalyst 9, a filter 10, a first NOx purification catalyst 11, a second NOx purification catalyst 12, and a second oxidation catalyst 13 are disposed in order from its upstream side. A variable nozzle 4c is disposed in the turbocharger 4. The variable nozzle 4c is operated to be opened or closed so that a flow area of the exhaust gas blown to the turbine wheel 4b is variable.

The first oxidation catalyst 9 removes carbon monoxide (CO) and hydrocarbon (HC) by oxidation. The filter 10 collects particulate matter (PM) in the exhaust gas. The first NOx purification catalyst 11 and the second NOx purification catalyst 12 are selective reduction catalysts that purify the exhaust gas by reducing NOx with a reducing agent. Specifically, the reducing agent such as urea water is added to the exhaust gas on the upstream side of the first NOx purification catalyst 11 in the exhaust passage 8, and then the urea water is hydrolyzed in response to heat of the exhaust gas and ammonia (NH3) is generated. This generated ammonia is adsorbed onto the first NOx purification catalyst 11 and the second NOx purification catalyst 12, and NOx reduction in these catalysts is performed. This reduction causes the NOx in the exhaust gas to be removed. The second oxidation catalyst 13 performs an oxidation treatment on the ammonia flowing out to a downstream side from the second NOx purification catalyst 12.

An additive supply device for injecting the reducing agent (urea water) as an additive into the exhaust passage 8 is disposed in the internal combustion engine 1. This additive supply device is provided with an adding valve 17 for injecting the urea water to the upstream side of the first NOx purification catalyst 11 and the downstream side of the filter 10 in the exhaust passage 8. The urea water that is added from the adding valve 17 to the exhaust gas in the exhaust passage 8 is dispersed in the form of finer mist by a dispersion plate 18 which is disposed on the downstream side of the adding valve 17 and the upstream side of the first NOx purification catalyst 11. The additive supply device is provided with a pump 16 and a tank 15, too. The pump 16 is connected to the adding valve 17 via a pipe 14. The tank 15 is connected to the pump 16 and stores the urea water. The additive supply device pumps up the urea water in the tank 15 and supplies the urea water to the pipe 14 and the adding valve 17 based on a positive rotation of the pump 16 and recovers the urea water in the adding valve 17 and the pipe 14 to the tank 15 based on a reverse rotation of the pump 16.

An electrical configuration of the control device for the internal combustion engine 1 will be described below. This device is provided with an electronic control device 21 for performing various types of control on the internal combustion engine 1. The electronic control device 21 is provided with a CPU that executes calculation processing regarding the above-described types of control, a ROM where programs and data required for the control are stored, a RAM where calculation results or the like of the CPU are temporarily stored, input and output ports for signal input and output to and from the outside, and the like.

The following various sensors are connected to the input port of the electronic control device 21. A vehicle speed sensor 22 that detects a traveling speed (vehicle speed) of the vehicle. ·An outside air temperature sensor 23 that detects a temperature of an atmosphere outside the vehicle (outside air temperature T2).

An ignition switch 36 that is operated when a driver manually begins to start the internal combustion engine 1 or stops an operation of the internal combustion engine 1. ·An accelerator position sensor 24 that detects an operation amount of an accelerator pedal 19 (accelerator operation amount) that is operated by the driver of the vehicle.

An air flow meter 25 that detects the amount of air passing through the intake passage 3. An intake pressure sensor 26 that detects a pressure of the intake passage 3 on the downstream side of the intake throttle valve 6 (intake pressure).

A crank position sensor 27 for detecting a rotation speed of a crankshaft 20 of the internal combustion engine 1. ·An exhaust gas temperature sensor 28 that detects a temperature of the exhaust gas at a part on the downstream side of the filter 10 and the upstream side of the adding valve 17 in the exhaust passage 8.

A NOx sensor 29 that detects the amount of NOx in the exhaust gas on the upstream side of the first NOx purification catalyst 11 in the exhaust passage 8. A driving circuit for the variable nozzle 4c, a driving circuit for the fuel injection valves 7, a driving circuit for the intake throttle valve 6, a driving circuit for the pump 16, a driving circuit for the adding valve 17, and the like are connected to the output port of the electronic control device 21.

The electronic control device 21 discerns operation states of the internal combustion engine 1 based on detection signals input from the sensors and outputs command signals to the driving circuits connected to the output port in accordance with the discerned engine operation states. Then, a fuel injection control regarding the internal combustion engine 1, an opening degree control regarding the variable nozzle 4c, an opening degree control regarding the intake throttle valve 6, a driving control regarding the pump 16, a driving control regarding the adding valve 17, and the like are conducted through the electronic control device 21. During the driving control regarding the pump 16, the pump 16 performs the positive rotation while the internal combustion engine 1 is in operation so that the supply of the urea water to the adding valve 17 is performed and the pump 16 performs the reverse rotation for a predetermined period of time after the internal combustion engine 1 is stopped so that the urea water in the adding valve 17 and the pipe 14 is recovered.

The electronic control device 21 executes a filter regeneration processing for raising a temperature of the filter 10 so that the collected PM is removed and a clogging of the filter 10 attributable to the collected PM is forestalled. Specifically, an unburned fuel component is supplied to the first oxidation catalyst 9 when a PM deposition amount of the filter 10 is at least an allowable upper limit value. This supply of the unburned fuel component to the first oxidation catalyst 9 is realized by, for example, a post injection, which is a fuel injection subsequent to a fuel injection from the fuel injection valves 7 for an engine operation (main injection). The supply of the unburned fuel component to the first oxidation catalyst 9 causes oxidation heat to be generated in the first oxidation catalyst 9 as a result of fuel oxidation. The temperature of the exhaust gas flowing through the exhaust passage 8 is raised by the oxidation heat generated in the first oxidation catalyst 9, and the temperature of the filter 10 is raised up to a value required for combustion of the PM by the exhaust gas increased in temperature being allowed to flow through the filter 10. Then, the PM deposited in the filter 10 is burned and removed, and thus the clogging of the filter 10 attributable to the PM is forestalled.

In the case of a stop command for the internal combustion engine 1 based on an OFF operation of the ignition switch 36 by the driver of the vehicle, the electronic control device 21 stops the operation of the internal combustion engine 1 by stopping the fuel injection from the fuel injection valves 7. In a case where the temperature of the exhaust gas is raised during an operation preceding the stop command for the internal combustion engine 1, however, the stopping of the engine 1 immediately following the stop command causes temperatures of the adding valve 17 exposed to the exhaust gas and a place around the adding valve 17 to be increased by residual heat after the engine 1 is stopped. This might lead to a failure attributable to overheating of the adding valve 17 after the internal combustion engine 1 is stopped. In a case where the vehicle has a low traveling speed value that is lower than a threshold determined in advance (such as "0") in the event of the stop command for the internal combustion engine 1, cooling of the adding valve 17 by traveling wind becomes difficult, causing the overheating of the adding valve 17.

In order to address these problems, the electronic control device 21 executes an idle operation before the stopping of the engine 1 subsequent to the stop command for the internal combustion engine 1 and determines when to stop the engine 1 after the idle operation in accordance with temperature of the adding valve 17. During this idle operation, the exhaust gas that is low in temperature flows through the exhaust passage 8 and cools the adding valve 17 and the place around the adding valve 17. In addition, the timing at which the internal combustion engine 1 is to be stopped after the idle operation can be postponed when the adding valve 17 has a high temperature. When the stopping of the internal combustion engine 1 is postponed and the idle operation is allowed to continue as described above, the overheating of the adding valve 17 that is attributable to the residual heat raising the temperature of the adding valve 17 after the stopping of the engine 1 can be suppressed.

An operation of the control device for the internal combustion engine 1 will be described below. The electronic control device 21 continues to perform the idle operation for the internal combustion engine 1 until the delay time elapses after the stop command for the internal combustion engine 1 is made, and then stops the engine 1 at a point in time when the delay time is over. The electronic control device 21 sets a longer delay time when the temperature of the adding valve 17 in the event of the stop command is high than when the temperature is low. In this case, the point in time when the delay time is over after the stop command for the internal combustion engine 1 is made becomes the timing at which the internal combustion engine 1 is to be stopped during the idle operation. Accordingly, the timing at which the internal combustion engine 1 is to be stopped during the idle operation is postponed when the temperature of the adding valve 17 in the event of the stop command for the internal combustion engine 1 is high, that is, when the temperature of the adding valve 17 is likely to be high after the stopping of the engine 1. In other words, the idle operation following the stop command for the internal combustion engine 1 continues for a long period of time.

The electronic control device 21 functions as a stop control unit when executing the processing that continues until the engine 1 is stopped after the stop command for the internal combustion engine 1 is made (hereinafter, referred to as a stop delay processing). When the above-described stop delay processing is executed, the exhaust gas that is low in temperature flows through the exhaust passage 8 and cools the adding valve 17 and the place around the adding valve 17 during the idle operation of the internal combustion engine 1 equivalent to the delay time. Because of the stop delay processing, the delay time becomes longer when the temperature of the adding valve 17 in the event of the stop command for the internal combustion engine 1 is high than when the temperature is low. Accordingly, when the temperature of the adding valve 17 in the event of the stop command for the internal combustion engine 1 is high and the temperature of the adding valve 17 is likely to be high after the engine 1 is stopped, the adding valve can be cooled by the low-temperature exhaust gas attributable to the idle operation being allowed to flow through the exhaust passage 8 over a long period of time.

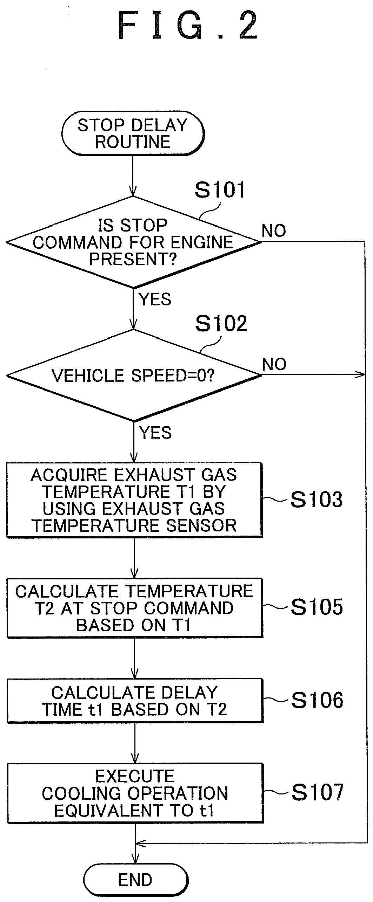

FIG. 2 is a flowchart illustrating a stop delay routine for the execution of the idle operation equivalent to the delay time (cooling operation) serving the purpose of the cooling of the adding valve 17 by the stop delay processing. This stop delay routine is periodically executed through the electronic control device 21 on, for example, a predetermined time interrupt basis.

The electronic control device 21 determines the presence or absence of the stop command for the internal combustion engine 1 as the processing of Step 101 (S101) of the stop delay routine. The electronic control device 21 determines whether or not the vehicle speed is "0", that is, whether or not the vehicle is stationary as the processing of S102. In the case of a negative determination in one of S101 and S102, the electronic control device 21 temporarily terminates the stop delay routine. The electronic control device 21 proceeds to S103 in the case of positive determinations in both S101 and S102.

The electronic control device 21 acquires an exhaust gas temperature T1 by using the exhaust gas temperature sensor 28 as the processing of S103. This temperature T1 corresponds to the temperature of the exhaust gas at the part on the downstream side of the filter 10 and the upstream side of the adding valve 17 in the exhaust passage 8. The electronic control device 21 proceeds to S105 thereafter.

The electronic control device 21 calculates a temperature T2 at a stop command, which is the temperature of the adding valve 17, based on the exhaust gas temperature T1 as the processing of S105. The electronic control device 21 proceeds to S106 thereafter. The electronic control device 21 calculates a delay time t1 used in the stop delay processing based on the temperature T2 of the adding valve 17 at a stop command as the processing of S106.

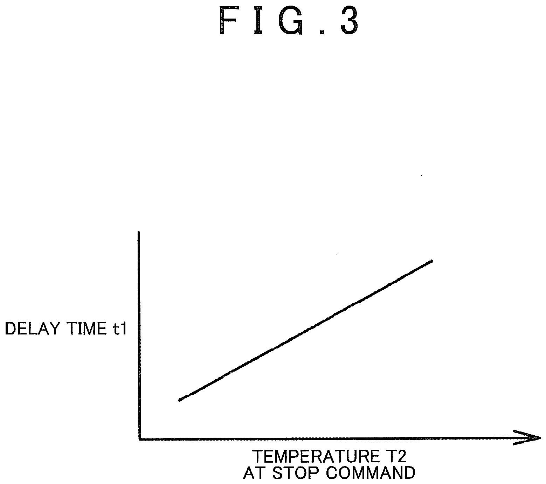

FIG. 3 shows how the delay time t1 that is calculated in S106 tends to change with respect to a change in the temperature T2 at a stop command. As is apparent from this drawing, the delay time t1 increases as the temperature T2 at a stop command increases. By the delay time t1 being calculated in this manner, the delay time t1 becomes longer when the temperature T2 at a stop command is high than when the temperature T2 at a stop command is low.

The electronic control device 21 executes, as the subsequent processing of S107, the idle operation for the purpose of cooling the adding valve 17 (cooling operation) during the delay time t1 which starts when the stop command for the internal combustion engine 1 is made. In addition, the electronic control device 21 stops the internal combustion engine 1 in the idle operation at a point in time when the delay time t1 is over.

The electronic control device 21 temporarily terminates the stop delay routine after executing the processing of S107. With this embodiment described in detail above, the following effects can be achieved.
(1) In the case of the stop command for the internal combustion engine 1, the stop delay processing for stopping the engine 1 after the continuation of the idle operation equivalent to the delay time t1 which corresponds to the temperature of the adding valve 17 pertaining to that case is executed. During the idle operation of the internal combustion engine 1 equivalent to the delay time t1 regarding the stop delay processing, the low-temperature exhaust gas flows through the exhaust passage 8 and cools the adding valve 17 and the place around the adding valve 17. Accordingly, the overheating of the adding valve 17 that is attributable to the residual heat raising the temperature of the adding valve 17 after the stopping of the engine 1 can be suppressed by the internal combustion engine 1 being stopped after the continuation of the idle operation equivalent to the delay time t1 (cooling operation).
(2) In of the stop delay processing, the delay time t1, which is a duration of the cooling operation, becomes longer as the temperature of the adding valve 17 in the event of the stop command for the internal combustion engine 1 (temperature T2 at a stop command) increases. Accordingly, the delay time t1 of the stop delay processing becomes longer when the temperature T2 of the adding valve 17 in the event of the stop command for the internal combustion engine 1 is high than when the temperature T2 is low. In this case, the cooling operation is allowed to be continued for a long period of time by the delay time t1 being lengthened as the temperature T2 of the adding valve 17 at a stop command increases, that is, as the temperature of the adding valve 17 is likely to be high after the stopping of the engine 1. Accordingly, the adding valve and the place around the adding valve can be cooled without excess or deficiency after the stop command for the internal combustion engine 1 is made.
(3) The cooling operation based on the stop delay processing is conducted on the condition that the vehicle speed is "0" when the stop command for the engine 1 is made. When the vehicle speed is "0", the cooling of the adding valve 17 by the traveling wind becomes difficult, and thus the overheating of the adding valve 17 is likely to ensue. However, the cooling of the adding valve 17 by the low-temperature exhaust gas can be performed through the cooling operation subsequent to the stop command for the internal combustion engine 1 so that the overheating of the adding valve 17 attributable to the above-described situation is suppressed.

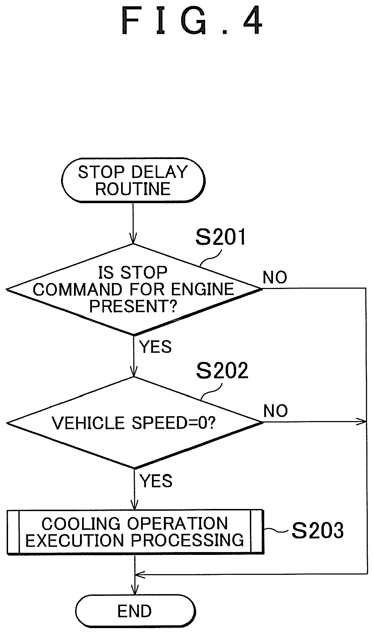

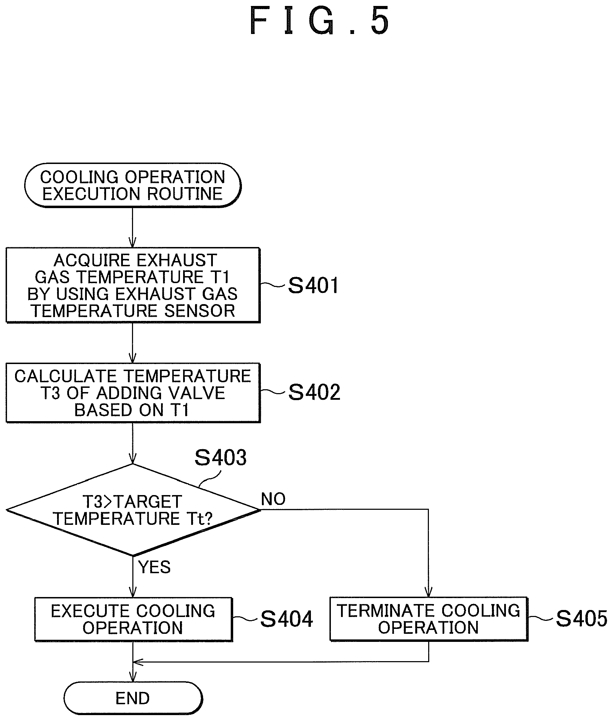

[Second Embodiment] Hereinafter, a second embodiment of the control device for an internal combustion engine will be described with reference to FIGS. 4 and 5.

In this embodiment, the idle operation (cooling operation) is continued until the temperature of the adding valve 17 is reduced and reaches a given target value and the internal combustion engine 1 is stopped when the temperature of the adding valve 17 reaches the target value during the idle operation. This corresponds to the stop delay processing subsequent to the stop command for the internal combustion engine 1. In this case, a point in time when the temperature of the adding valve 17 reaches the target value during the idle operation becomes the timing at which the internal combustion engine 1 is to be stopped. Accordingly, when it takes a long time for the temperature of the adding valve 17 to be reduced and reach the target value, that is, when the temperature of the adding valve 17 during the idle operation is high, the timing at which the internal combustion engine 1 in the idle operation is to be stopped is postponed. In other words, the idle operation subsequent to the stop command for the internal combustion engine 1 continues for a long period of time.

FIG. 4 is a flowchart illustrating the stop delay routine according to this embodiment. This stop delay routine is also periodically executed through the electronic control device 21 on a predetermined time interrupt basis. The processing of S201 and S202 according to this routine corresponds to the processing of S101 and S102 according to the stop delay routine of the first embodiment that is illustrated in FIG. 2.

The electronic control device 21 determines the presence or absence of the stop command for the internal combustion engine 1 as the processing of S201 of the stop delay routine that is illustrated in FIG. 4. The electronic control device 21 determines whether or not the vehicle speed is "0" as the processing of S202. In the case of a negative determination in one of S201 and S202, the electronic control device 21 temporarily terminates the stop delay routine. The electronic control device 21 proceeds to the cooling operation execution processing of S203 in the case of positive determinations in both S201 and S202. The cooling operation execution processing of S203 is to perform the idle operation (above-described cooling operation) on the internal combustion engine 1 until the temperature of the adding valve 17 is reduced and reaches a target temperature Tt (target value).

FIG. 5 is a flowchart illustrating a cooling operation execution routine for the execution of the cooling operation processing described above. This cooling operation execution routine is initiated through the electronic control device 21 when S203 of the stop delay routine (FIG. 4) starts. The cooling operation execution routine that is initiated as described above is periodically executed on a predetermined time interrupt basis, through the electronic control device 21, until the cooling operation is terminated.

The electronic control device 21 acquires the exhaust gas temperature T1 by using the exhaust gas temperature sensor 28 as the processing of S401 of the cooling operation execution routine. Then, the electronic control device 21 calculates a temperature T3 of the adding valve 17 pertaining to this case based on the exhaust gas temperature T1 as the processing of S402. The electronic control device 21 determines, as the subsequent processing of S403, whether or not the temperature T3 of the adding valve 17 is higher than the target temperature Tt. The electronic control device 21 proceeds to S404 in the case of a positive determination in S403. The electronic control device 21 executes the cooling operation as the processing of S404, and then temporarily terminates this cooling operation execution routine.

The electronic control device 21 proceeds to S405 in the case of a negative determination in S403 with the temperature T3 of the adding valve 17 being lower than the target temperature Tt. The electronic control device 21 stops the internal combustion engine 1 by terminating the cooling operation as the processing of S405, and then terminates this cooling operation execution routine. When die cooling operation execution routine is terminated through S405 as described above, the periodic execution of this routine that is performed at predetermined time intervals is stopped. Accordingly, after the initiation of the cooling operation, the cooling operation continues until the temperature T3 of the adding valve 17 is reduced and reaches the target temperature Tt.

The electronic control device 21 immediately stops the internal combustion engine 1 when proceeding to S405 with a negative determination in the processing of S403 after proceeding to S403 for the first time after the initiation of the cooling operation execution routine, and that is, when proceeding to S405 in a situation in which the cooling operation is not executed.

This embodiment can achieve the following effects in addition to those similar to the effects of (1) to (3) that are achieved by the first embodiment. (4) The idle operation (cooling operation) of the internal combustion engine 1 continues until the temperature T3 of the adding valve 17 is reduced and reaches the given target temperature Tt as the stop delay processing subsequent to the stop command for the internal combustion engine 1, and the internal combustion engine 1 is stopped when the temperature of the adding valve 17 reaches the target value during the idle operation. In this case, the cooling operation of the internal combustion engine 1 is terminated and the engine 1 is stopped after the temperature T3 of the adding valve 17 is reduced and reaches the target temperature Tt, and thus the internal combustion engine 1 is not stopped before the temperature T3 of the adding valve 17 is reduced and reaches the target temperature Tt. Accordingly, the temperature T3 of the adding valve 17 can be reduced more reliably based on the continuation of the cooling operation.

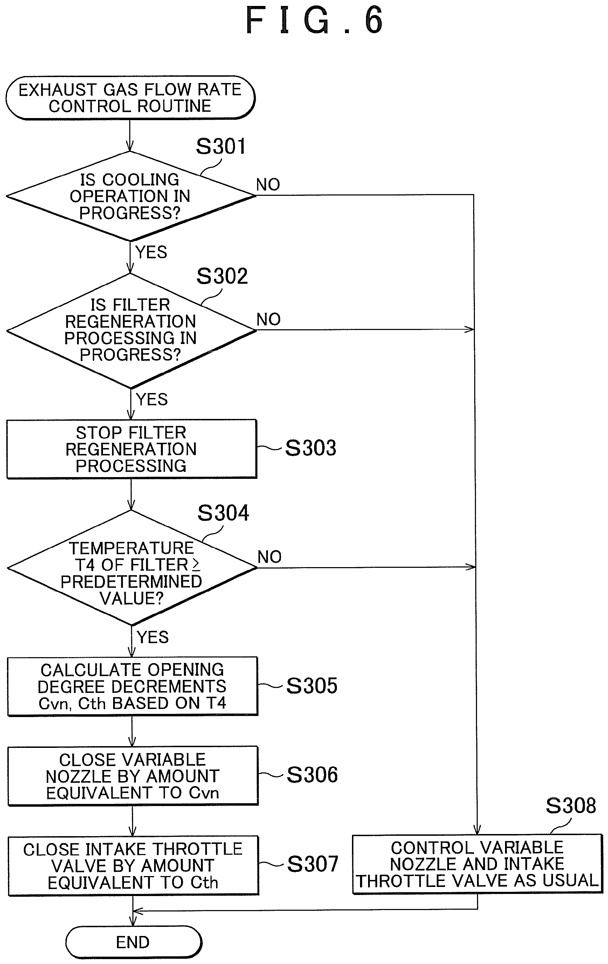

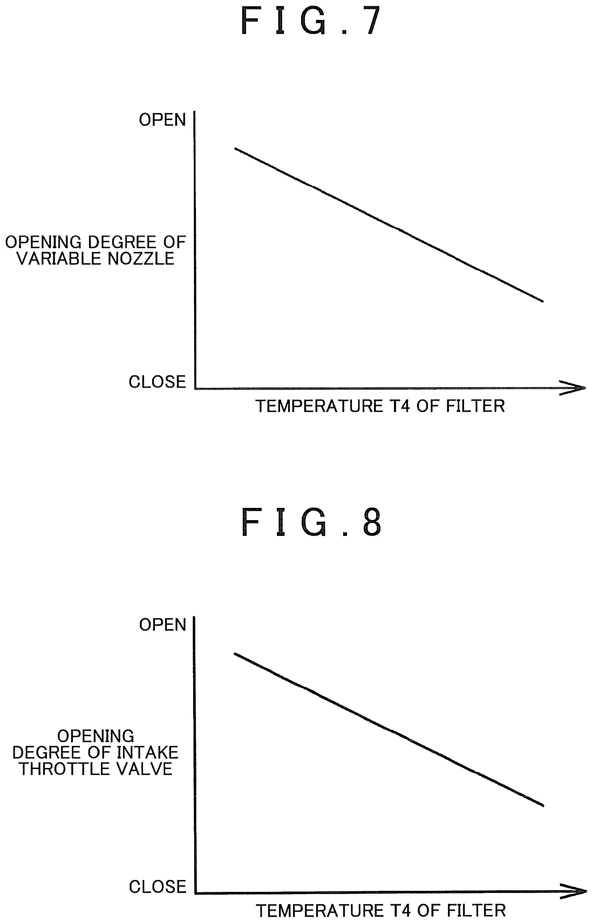

[Third Embodiment] Hereinafter, a third embodiment of the control device for an internal combustion engine will be described with reference to FIGS. 6 and 8.

During the execution of the filter regeneration processing, the temperature of the filter 10 that is positioned at a part on the upstream side of the adding valve 17 in the exhaust passage 8 increases, and thus the temperature of the exhaust gas that flows from the filter 10 to the adding valve 17 is likely to increase. Accordingly, in a case where the stop command for the internal combustion engine 1 is made based on the OFF operation of the ignition switch 36 during the execution of the filter regeneration processing, the cooling operation of the internal combustion engine 1 based on the stop delay processing is performed after the stop command is made, and thus a situation arises in which the filter regeneration processing is executed while the cooling operation is executed. In this state where the filter regeneration processing is executed during the cooling operation of the internal combustion engine 1, the exhaust gas that is high in temperature might flow from the filter 10 to the adding valve 17 to result in the overheating of the adding valve 17.

In this embodiment, the intake throttle valve 6 and the variable nozzle 4c are operated through the electronic control device 21, so that a flow rate of the exhaust gas flowing through the exhaust passage 8 is decreased, when the filter regeneration processing is executed while the cooling operation of the internal combustion engine 1 is performed based on the stop delay processing. This is to suppress the overheating of the adding valve 17 during the cooling operation that is attributable to the execution of the filter regeneration processing. The intake throttle valve 6 and the variable nozzle 4c function as adjusting mechanisms that adjust the flow rate of the exhaust gas flowing through the exhaust passage 8. In this case, the electronic control device 21 functions as a flow rate control unit that operates the adjusting mechanisms in order to decrease the flow rate of the exhaust gas.

FIG. 6 is a flowchart illustrating an exhaust gas flow rate control routine for driving the intake throttle valve 6 and the variable nozzle 4c. This exhaust gas flow rate control routine is periodically executed through the electronic control device 21 on, for example, a predetermined time interrupt basis.

The electronic control device 21 determines, as the processing of S301 of this routine, whether or not the cooling operation of the internal combustion engine 1 based on the stop delay processing is in progress. The electronic control device 21 proceeds to S308 in the case of a negative determination in S301. The electronic control device 21 controls the variable nozzle 4c and the intake throttle valve 6 as usual as the processing of S308, and then temporarily terminates the exhaust gas flow rate control routine. The electronic control device 21 proceeds to S302 in the case of a positive determination in S301. The electronic control device 21 determines, as the processing of S302, whether or not the execution of the filter regeneration processing is in progress. The electronic control device 21 proceeds to S308 in the case of a negative determination in S302. The electronic control device 21 proceeds to S303 in the case of a positive determination in S302.

The electronic control device 21 stops the filter regeneration processing as the processing of S303 and determines whether or not a temperature T4 of the filter 10 is at least a predetermined value as the subsequent processing of S304. The temperature T4 of the filter 10 can be obtained from the temperature T1 that is detected by the exhaust gas temperature sensor 28, the amount of air suctioned into the internal combustion engine 1, a post injection quantity, and the like. A value that is higher than the temperature of the adding valve 17 (temperature T3) is adopted as the predetermined value. For example, a fixed value that is optimally determined through an experiment or the like can be adopted as the predetermined value or a variable value that is variably set based on the temperature T3 of the adding valve 17 can be adopted as the predetermined value.

The electronic control device 21 proceeds to S308 in the case of a negative determination in S304. The electronic control device 21 proceeds to S305 in the case of a positive determination in S304. The processing following S305 is to adjust the variable nozzle 4c and the intake throttle valve 6 to a closing side so that the flow rate of the exhaust gas flowing through the exhaust passage 8 is decreased. The electronic control device 21 calculates, as the processing of S305, an opening degree decrement Cvn of the variable nozzle 4c and an opening degree decrement Cth of the intake throttle valve 6 based on the temperature T4 of the filter 10. Each of the opening degree decrement Cvn and the opening degree decrement Cth is calculated to become a higher value as the temperature T4 of the filter 10 increases. The electronic control device 21 proceeds to S306 thereafter.

The electronic control device 21 performs an operation of the variable nozzle 4c to the closing side equivalent to the opening degree decrement Cvn as the processing of S306 and performs an operation of the intake throttle valve 6 to the closing side equivalent to the opening degree decrement Cth as the processing of S307. Then, the electronic control device 21 temporarily terminates the exhaust gas flow rate control routine. FIGS. 7 and 8 are graphs illustrating relationships between the temperature T4 of the filter 10 and an opening degree of the variable nozzle 4c and between the temperature T4 of the filter 10 and an opening degree of the intake throttle valve 6 pertaining to a case where the processing of S306 and S307 is executed, respectively.

As illustrated in FIG. 7, the opening degree of the variable nozzle 4c is a value on the closing side when the temperature T4 of the filter 10 is high. The flow area of the exhaust gas blown to the turbine wheel 4b of the turbocharger 4 is decreased by the above-described operation of the variable nozzle 4c to the closing side equivalent to the opening degree decrement Cvn. As a result of this decrease in the flow area of the exhaust gas, the flow rate of the exhaust gas flowing through the exhaust passage 8 of the internal combustion engine 1 is decreased.

As illustrated in FIG. 8, the opening degree of the intake throttle valve 6 is a value on the closing side when the temperature T4 of the filter 10 is high. A flow area of the air in the intake passage 3 of the internal combustion engine 1 is decreased by the above-described operation of the intake throttle valve 6 to the closing side equivalent to the opening degree decrement Cth. Accordingly, the amount of the air that is supplied to the internal combustion engine 1 is decreased. As a result, the flow rate of the exhaust gas flowing through the exhaust passage 8 of the internal combustion engine 1 is decreased.

The following effects can be obtained with this embodiment. (5) During the execution of the filter regeneration processing, the temperature of the filter 10 that is positioned at the part on the upstream side of the adding valve 17 in the exhaust passage 8 is raised by a reaction between the unburned fuel component and oxygen being used, and thus the temperature of the exhaust gas that flows from the filter 10 to the adding valve 17 is likely to be increased. Accordingly, when the temperature of the filter 10 rises through the execution of the filter regeneration processing during the cooling operation of the internal combustion engine 1 based on the stop delay processing, the high-temperature exhaust gas might flow from the filter 10 to the adding valve 17 to cause the overheating of the adding valve 17.

However, when the execution of the filter regeneration processing is in progress during the execution of the cooling operation of the internal combustion engine 1 based on the stop delay processing, the filter regeneration processing is stopped and the intake throttle valve 6 and the variable nozzle 4c are operated so that the flow rate of the exhaust gas flowing through the exhaust passage 8 is decreased. The supply of the unburned fuel component to the exhaust passage 8 is stopped by the filter regeneration processing being stopped. In addition, the operations of the intake throttle valve 6 and the variable nozzle 4c cause the amount of the oxygen reacting with the unburned fuel component remaining in the exhaust passage 8 to decrease, and thus a rise in the temperature of the filter 10 which is attributable to the reaction between the unburned fuel component and the oxygen can be suppressed. As a result, a rise in the temperature of the exhaust gas at the part on the downstream side of the filter 10 in the exhaust passage 8 can be suppressed, and the flow of the high-temperature exhaust gas from the filter 10 to the adding valve 17 can be suppressed. Accordingly, the overheating of the adding valve 17 that is attributable to the flow of the high-temperature exhaust gas from the filter 10 to the adding valve 17 can be suppressed.
(6) In the event of the execution of the filter regeneration processing during the execution of the cooling operation of the internal combustion engine 1 based on the stop delay processing, the amounts of die operations of the intake throttle valve 6 and the variable nozzle 4c for decreasing the flow rate of the exhaust gas flowing through the exhaust passage 8 increase as the temperature of the filter 10 increases. Specifically, the opening degree decrements Cvn, Cth are increased in value as the temperature of the filter 10 increases, and thus the amount of the operation of the variable nozzle 4c to the closing side equivalent to the opening degree decrement Cvn and the amount of the operation of the intake throttle valve 6 to the closing side equivalent to the opening degree decrement Cth increase. In this case, the amount of the oxygen that reacts with the unburned fuel component can be decreased as the temperature of the filter 10 increases, and a rise in the temperature of the filter 10 which is attributable to the reaction can be more effectively suppressed. Accordingly, a decrease in the flow rate of the exhaust gas can be performed without excess or deficiency when the decrease in the flow rate of the exhaust gas is performed so that the overheating of the adding valve 17 attributable to the flow of the high-temperature exhaust gas from the filter 10 to the adding valve 17 is suppressed.

[Other Embodiments] The above-described embodiments can be modified as follows. ·In the third embodiment, the intake throttle valve 6 and the variable nozzle 4c are operated, so that the flow rate of the exhaust gas flowing through the exhaust passage 8 is decreased, when the execution of the filter regeneration processing is in progress while the cooling operation of the internal combustion engine 1 is performed based on the stop delay processing. However, the filter regeneration processing does not necessarily have to be stopped in this case. Although the unburned fuel component is supplied to the exhaust passage 8 through the filter regeneration processing in this case, the amount of the oxygen that reacts with the unburned fuel component is small. Accordingly, the temperature of the exhaust gas at the part on the downstream side of the filter 10 in the exhaust passage 8 is unlikely to rise, and the flow of the high-temperature exhaust gas from the filter 10 to the adding valve 17 can be suppressed. Accordingly, the overheating of the adding valve 17 that is attributable to the flow of the high-temperature exhaust gas from the filter 10 to the adding valve 17 can be suppressed.
- In the third embodiment, the amounts of the operations of the intake throttle valve 6 and the variable nozzle 4c for decreasing the flow rate of the exhaust gas flowing through the exhaust passage 8 can also increase in stages as the temperature of the filter 10 increases. In this case, the opening degree decrement Cvn and the opening degree decrement Cth are values that increase in stages as the temperature of the filter 10 increases.
- In the third embodiment, the amounts of the operations of the intake throttle valve 6 and the variable nozzle 4c for decreasing the flow rate of the exhaust gas flowing through the exhaust passage 8 may be fixed values optimally determined in advance through an experiment or the like. In this case, both the opening degree decrement Cvn and the opening degree decrement Cth are fixed values.
- The role of the adjusting mechanism that adjusts the flow rate of the exhaust gas flowing through the exhaust passage 8 is fulfilled by the intake throttle valve 6 and the variable nozzle 4c. The role of the adjusting mechanism may be fulfilled by only one of the intake throttle valve 6 and the variable nozzle 4c as well.
- The processing of S102 of the stop delay routine illustrated in FIG. 2 and the processing of S202 of the stop delay routine illustrated in FIG. 4 adopt a vehicle speed of "0" (that is, the vehicle being stationary) as a condition for the execution of the cooling operation of the internal combustion engine 1 in the stop delay processing. However, the condition of the vehicle speed of "0" is optional. For example, the condition may be replaced with the condition that the vehicle speed is lower than a threshold which exceeds "0".
- In the stop delay processing according to the first embodiment, the delay time t1 may be lengthened in stages as the temperature T2 of the adding valve 17 at a stop command increases. -The temperature T2 of the adding valve 17 and the temperature T3 of the adding valve 17 at a stop command may be obtained based on a temperatures of the first NOx purification catalyst 11 or the second NOx purification catalyst 12. The temperature of the first NOx purification catalyst 11 and the temperature of the second NOx purification catalyst 12 can be obtained based on the exhaust gas temperature T1 that is detected by the exhaust gas temperature sensor 28, the flow rate of the air that is supplied to the internal combustion engine 1, the amount of fuel consumption of the engine 1, and the like.
- In the above description, a situation in which the OFF operation of the ignition switch 36 is performed by the driver of the vehicle is used as an example of a situation in which the stop command for the internal combustion engine is made. However, in the case of an internal combustion engine performing automatic stop and automatic restart in accordance with traveling situations of the vehicle and the like, examples of the situation can also include a situation in which an automatic stop condition regarding the engine is satisfied.
- A reducing agent solution other than the urea water may also be used as the additive.

## Claims

1. A control device for an internal combustion engine (1), the internal combustion engine (1) including an adding valve (17) for injecting an additive into an exhaust passage of the internal combustion engine (1), the control device comprising:
an electronic control unit (21) configured to control the internal combustion engine (1) after a stop command for the internal combustion engine (1) is made such that the internal combustion engine (1) is stopped after an idle operation of the internal combustion engine (1), the electronic control unit (21) being configured to calculate a timing at which the internal combustion engine (1) is to be stopped after the idle operation in accordance with a temperature of the adding valve (17).

2. The control device according to claim 1,
wherein the electronic control unit (21) is configured to proceed with the idle operation until a predetermined delay time is over after the stop command is made, the electronic control unit (21) being configured to set a longer delay time when the temperature of the adding valve (17) in the event of the stop command is comparatively high than when the temperature is comparatively low.

3. The control device according to claim 1,
wherein the electronic control unit (21) is configured to stop the internal combustion engine (1) when the temperature of the adding valve (17) is reduced and reaches a target value during the idle operation.

4. The control device according to claim 2 or 3,
wherein the electronic control unit (21) is configured to execute the idle operation subsequent to the stop command in a case where a traveling speed of a vehicle in which the internal combustion engine (1) is mounted is lower than a threshold determined in advance.

5. The control device according to any one of claims 2 to 4,
wherein the internal combustion engine (1) includes a filter positioned on an upstream side of the adding valve (17) in the exhaust passage for collecting particulate matter in exhaust gas and a regulator for adjusting a flow rate of the exhaust gas flowing through the exhaust passage,
wherein the electronic control unit (21) is configured to control the regulator during the idle operation and in a case where a filter regeneration processing for raising a temperature of the filter through a reaction between an unburned fuel component and oxygen for removal of the particulate matter collected by the filter is executed such that the flow rate of the exhaust gas flowing through the exhaust passage is decreased.

6. The control device according to claim 5,
wherein the electronic control unit (21) is configured to control the regulator when the filter regeneration processing is executed during the idle operation such that the flow rate of the exhaust gas flowing through the exhaust passage is decreased as the temperature of the filter increases.

## Patentansprüche

1. Steuerungsvorrichtung für einen Verbrennungsmotor (1), wobei der Verbrennungsmotor (1) ein Zugabeventil (17) zum Einspeisen eines Zusatzstoffes in einen Auslasskanal des Verbrennungsmotors (1) umfasst, wobei die Steuerungsvorrichtung umfasst:
eine elektronische Steuerungseinheit (21), die dazu ausgebildet ist, den Verbrennungsmotor (1), nachdem ein Stoppbefehl für den Verbrennungsmotor (1) gegeben wurde, derart zu steuern, dass der Verbrennungsmotor (1) nach einem Leerlaufbetrieb des Verbrennungsmotors (1) gestoppt wird, wobei die elektronische Steuerungseinheit (21) dazu ausgebildet ist, einen Zeitpunkt, zu dem der Verbrennungsmotor (1) nach dem Leerlaufbetrieb zu stoppen ist, entsprechend einer Temperatur des Zugabeventils (17) zu berechnen.

2. Steuerungsvorrichtung nach Anspruch 1,
wobei die elektronische Steuerungseinheit (21) dazu ausgebildet ist, mit dem Leerlaufbetrieb fortzufahren, bis eine vorbestimmte Verzögerungszeit nachdem der Stoppbefehl gegeben wurde verstrichen ist, wobei die elektronische Steuerungseinheit (21) dazu ausgebildet ist, eine längere Verzögerungszeit einzustellen, wenn die Temperatur des Zugabeventils (17) bei Erfolgen des Stoppbefehls vergleichsweise hoch ist als wenn die Temperatur vergleichsweise niedrig ist.

3. Steuerungsvorrichtung nach Anspruch 1,
wobei die elektronische Steuerungseinheit (21) dazu ausgebildet ist, den Verbrennungsmotor (1) zu stoppen, wenn die Temperatur des Zugabeventils (17) reduziert wird und während des Leerlaufbetriebs einen Sollwert erreicht.

4. Steuerungsvorrichtung nach Anspruch 2 oder 3,
wobei die elektronische Steuerungseinheit (21) dazu ausgebildet ist, den Leerlaufbetrieb auf den Stoppbefehl folgend in einem Fall auszuführen, in dem eine Fahrgeschwindigkeit eines Fahrzeugs, in dem der Verbrennungsmotor (1) angebracht ist, niedriger als eine im Voraus bestimmte Schwelle ist.

5. Steuerungsvorrichtung nach einem beliebigen der Ansprüche 2 bis 4,
wobei der Verbrennungsmotor (1) einen Filter, der in dem Auslasskanal auf einer stromaufwärtigen Seite des Zugabeventils (17) angeordnet ist, zum Auffangen von Partikeln in Abgas und einen Regler zum Einstellen einer Durchströmrate des durch den Auslasskanal strömenden Abgases umfasst,
wobei die elektronische Steuerungseinheit (21) dazu ausgebildet ist, den Regler während des Leerlaufbetriebs und in einem Fall, in dem eine Filterregenerationsverarbeitung zum Erhöhen einer Temperatur des Filters durch eine Reaktion zwischen einer unverbrannten Kraftstoffkomponente und Sauerstoff zum Entfernen der durch den Filter aufgefangenen Partikel ausgeführt wird, derart zu steuern, dass die Durchströmrate des durch den Auslasskanal strömenden Abgases verringert wird.

6. Steuerungsvorrichtung nach Anspruch 5,
wobei die elektronische Steuerungseinheit (21) dazu ausgebildet ist, den Regler, wenn die Filterregenerationsverarbeitung während des Leerlaufbetriebs ausgeführt wird, derart zu steuern, dass die Durchströmrate des durch den Auslasskanal strömenden Abgases mit Zunehmen der Temperatur des Filters verringert wird.

## Revendications

1. Dispositif de commande pour un moteur à combustion interne (1), le moteur à combustion interne (1) comprenant une soupape d'addition (17) destinée à injecter un additif dans un passage d'échappement du moteur à combustion interne (1), le dispositif de commande comportant :
une unité de commande électronique (21) configurée pour commander le moteur à combustion interne (1) une fois qu'une commande d'arrêt pour le moteur à combustion interne (1) est faite de telle sorte que le moteur à combustion interne (1) est arrêté après un fonctionnement au ralenti du moteur à combustion interne (1), l'unité de commande électronique (21) étant configurée pour calculer un moment où le moteur à combustion interne (1) doit être arrêté après le fonctionnement au ralenti en fonction d'une température de la soupape d'addition (17).

2. Dispositif de commande selon la revendication 1,
dans lequel l'unité de commande électronique (21) est configurée pour poursuivre le fonctionnement au ralenti jusqu'à ce qu'un temps de retard prédéterminé soit terminé après que la commande d'arrêt soit faite, l'unité de commande électronique (21) étant configurée pour établir un temps de retard plus long quand la température de la soupape d'addition (17) dans le cas de la commande d'arrêt est comparativement haute que quand la température est comparativement basse.

3. Dispositif de commande selon la revendication 1,
dans lequel l'unité de commande électronique (21) est configurée pour arrêter le moteur à combustion interne (1) quand la température de la soupape d'addition (17) est réduite et atteint une valeur cible pendant le fonctionnement au ralenti.

4. Dispositif de commande selon la revendication 2 ou 3,
dans lequel l'unité de commande électronique (21) est configurée pour exécuter le fonctionnement au ralenti à la suite de la commande d'arrêt dans un cas où une vitesse de déplacement d'un véhicule dans lequel le moteur à combustion interne (1) est monté est inférieure à un seuil déterminé à l'avance.

5. Dispositif de commande selon l'une quelconque des revendications 2 à 4,
dans lequel le moteur à combustion interne (1) comprend un filtre positionné sur un côté amont de la soupape d'addition (17) dans le passage d'échappement pour recueillir de la matière en particules dans le gaz d'échappement et un régulateur destiné à ajuster un débit du gaz d'échappement s'écoulant à travers le passage d'échappement,
dans lequel l'unité de commande électronique (21) est configurée pour commander le régulateur pendant le fonctionnement au ralenti et dans un cas où un traitement de régénération de filtre destiné à élever une température du filtre par l'intermédiaire d'une réaction entre un composant de carburant non brûlé et de l'oxygène pour l'élimination de la manière en particules recueillie par le filtre est exécuté de telle sorte que le débit du gaz d'échappement qui s'écoule à travers le passage d'échappement est diminué.

6. Dispositif de commande selon la revendication 5,
dans lequel l'unité de commande électronique (21) est configurée pour commander le régulateur quand le traitement de régénération de filtre est exécuté pendant le fonctionnement au ralenti de telle sorte que le débit du gaz d'échappement qui s'écoule à travers le passage d'échappement est diminué lorsque la température du filtre augmente.
